# EUROPÄISCHE PATENTSCHRIFT

(11) **EP 2 853 979 B1**
(45) Veröffentlichungstag und Bekanntmachung des Hinweises auf die Patenterteilung: **17.01.2018**
(21) Anmeldenummer: 13186674.1
(22) Anmeldetag: 30.09.2013
(51) Int. Cl.: G06F 1/16

(54) **DISPLAY-GERÄT**
DISPLAY APPARATUS
APPAREIL D'AFFICHAGE

(43) Veröffentlichungstag der Anmeldung: 01.04.2015
(73) Patentinhaber: Siemens Aktiengesellschaft, 80333 München (DE)
(72) Erfinder: Moniac, Sven, 91056 Erlangen (DE); Schön, Markus, 91054 Erlangen (DE)

(56) Entgegenhaltungen:
- WO-A1-2011/116856
- US-A1- 2009 256 796
- US-A1- 2012 075 809

## Beschreibung

Die Erfindung betrifft ein Display-Gerät zur industriellen Anwendung mit einem Gehäuse, an dem ein Display und eine Frontscheibe befestigt sind.

Unter dem Begriff "Display-Gerat" zur industriellen Anwendung ist im Zusammenhang mit der Erfindung jedes Gerät zu verstehen, welches für eine industrielle Anwendung vorgesehen ist und ein Display aufweist. Insbesondere sind darunter Anzeigegeräte oder kombinierte Anzeige- und Bediengeräte zu verstehen, welche als Benutzerschnittstelle mit einer industriellen Steuerung verbunden sind. Darüber hinaus sind häufig auch industrielle Steuerungen (Speicherprogrammierbare Steuerungen, numerische Steuerungen etc.) selbst oder auch mit einer industriellen Steuerung verbundene Komponenten wie Wechselrichter, Sensoreinheiten etc. mit Displays ausgestattet und somit "Display-Geräte" im Sinne der Erfindung. Auch Programmiereinrichtungen für die genannten Steuerungen bzw. Geräte können als "Display-Geräte" im Sinne der Erfindung verstanden werden, sofern sie für die Anwendung in einer industriellen Umgebung ausgebildet sind.

Bei einem Display-Gerät zur industriellen Anwendung ist es notwendig, vor dem eigentlichen Display (in der Regel einer Flüssigkristallanzeige, LCD-Panel bzw. LED-Panel), auf dem die Bildinhalte dargestellt werden, eine Schutzscheibe aus Glas vorzusehen, insbesondere um damit eine bestimmte IP-Schutzklasse zu erreichen oder eine bestimmte Industrienorm zu erfüllen. Damit im Betrieb des Display-Geräts nicht zwischen dem Display und der Schutzscheibe Staub bzw. Schmutz eindringt, muss der Raum zwischen Display und Scheibe mittels einer so genannten Staubdichtung abgedichtet werden. Dies hat zur Folge, dass zwischen der Scheibe und dem Display ein Abstand entsteht. Dieser Abstand verschlechtert den optischen Eindruck einer grafischen Anzeige. Ferner führt der Abstand bei Touch-Display-Geräten zu Parallaxe-Problemen und mindert den optischen Eindruck.

Aus der Druckschrift WO 2011/116856 A1 sind eine Display-Anordnung und deren Montage bekannt, bei denen zwischen einem Frontteil und einer Anzeige ein Zwischenteil vorgesehen ist, wobei zur Montage der Display-Anordnung die Anzeige in das Frontteil eingelegt und reibschlüssig mit dem Zwischenteil verbunden wird. Das Zwischenteil kann aus einem Gummiwerkstoff gefertigt sein und auch als Dichtung dienen.

Aus der Druckschrift US 2012/0075809 A1 sind ein elektronisches Mobilgerät mit einem Gehäuse und einem Display bekannt. Zwischen dem Gehäuse, einem Abstandshalter und einer Außenplatte ist eine Dichtung vorhanden, um das Eindringen von Schmutz in das Gehäuse zu verhindern.

Aus der Druckschrift US 2009/0256796 A1 ist eine Anzeigevorrichtung mit einer Hintergrundbeleuchtung bekannt, bei der zwischen einem Formrahmen und einem Gehäusebereich ein Dichtungselement vorhanden ist, um einen Endabschnitt eines Displays zu umgeben, um so den Raum zwischen dem Endabschnitt des Displays und dem Formrahmen vollständig abzudichten.

Aufgabe der vorliegenden Erfindung ist es daher, ein Display-Gerät zu schaffen, bei dem der Abstand zwischen dem Display und der Scheibe möglichst klein gehalten wird.

Diese Aufgabe wird bei einem Display-Gerät zur industriellen Anwendung mit einem Gehäuse, an dem ein Display und eine Frontscheibe befestigt sind, erfindungsgemäß durch den Anspruch 1 gelöst. Bei heute üblichen Display-Geräten wird zum Schutz vor Staub und Verschmutzung auf der Vorderseite des Displays eine um den äußeren Randbereich des Displays umlaufende Dichtung vorgesehen, die bei der Montage gegen eine entsprechende Gehäuseanformung des Gerätegehäuses gedrückt wird und damit die Vorderseite des Displays abdichtet. Diese Dichtung hat jedoch den Nachteil, dass sie sich zwischen dem Display und der Frontscheibe befindet und damit den Abstand zwischen Display und Frontscheibe vergrößert.

Eine gemäß der Erfindung am äußeren Rand des Displays seitlich um das Display umlaufende Dichtung hat gegenüber diesem Stand der Technik den Vorteil, dass kein zusätzlicher Platzbedarf zwischen dem Display und der Frontscheibe für die Dichtung benötigt wird. Der Abstand zwischen dem Display und der Frontscheibe kann damit minimiert werden. Weiterhin erlaubt diese Ausführungsform eine schwingungsgedämpfte Befestigung des Displays an dem Gehäuse. Durch den minimierten Abstand entsteht für den Anwender ein guter optischer Eindruck bezüglich auf dem Display dargestellter Bildinhalte und insbesondere bei Touch-Display-Geräten wird eine sichere Bedienbarkeit gewährleistet, da Parallaxe-Probleme minimiert werden. Die erforderliche Schutzfunktion vor dem Eindringen von Staub bzw. Schmutz ist dabei weiterhin gewährleistet.

Darüber hinaus wirkt sich der reduzierte Abstand zwischen Display und Frontscheibe positiv auf die gesamte Bautiefe eines betreffenden Display-Geräts aus und auch bezüglich der Herstellungskosten entsteht kein Nachteil gegenüber bisherigen Display-Geräten.

Um das Eindringen von Staub bzw. Schmutz in den Zwischenraum zwischen Display und der Frontscheibe wirksam zu verhindern, verläuft die Dichtung vorteilhaft ohne Unterbrechung um den kompletten seitlichen Rand des Displays herum, das heißt entlang aller vier Seitenränder des Displays. Ebenso liegt die Dichtung in eingebautem Zustand vorteilhaft entlang ihres gesamten Umfangs, das heißt ebenfalls ohne Unterbrechung, an dem den Seitenrändern des Displays gegenüberliegenden Gehäuseteil an. Eine gleichmäßig um den gesamten Umfang des Display-Randes umlaufende Dichtung hat ferner den Vorteil, dass sie eine Zentrierung des Displays im Gehäuse bewirkt.

Eine Ausführungsform der Erfindung sieht vor, dass das Dichtungsprofil der Dichtung eine Einführschräge aufweist, die den Einbau des Displays in das Display-Gerät erleichtert.

Eine Ausführungsform der Erfindung sieht vor, dass das Dichtungsprofil der Dichtung Augenlaschen aufweist, die zur Befestigung der Dichtung im Gehäuse des Display-Gerätes dienen. Dadurch kann die Dichtung bei der Montage bereits im Gehäuse befestigt werden, bevor das Display eingesetzt wird. Die Dichtung ist also nicht erst durch die Klemmwirkung des eingesetzten Displays im Gehäuse befestigt. Diese Ausführungsform hat den weiteren Vorteil, dass die Befestigung der Dichtung ohne Klebverbindung erfolgt und somit eine Zerstörungsfreie und einfache Demontage ermöglicht wird.

Gemäß der Erfindung ist eine Aufweitung der Dichtung im Klemmbereich der Dichtung (also im Bereich zwischen dem Display und dem Gehäuse bei dem fertig montierten Display-Gerät) vorgesehen, durch die der Federweg der Dichtung vergrößert wird. Dadurch lassen sich verhältnismäßig große Fertigungstoleranzen in dem Gehäuse ausgleichen. Die Aufweitung kann insbesondere wulstartig, keilförmig, als Lippe etc. ausgebildet sein.

Gemäß der Erfindung ist ferner eine umlaufende Nut im Klemmbereich der Dichtung vorgesehen zur Verringerung des Anpressdruckes, den die Dichtung auf das Display ausübt. Die Einhaltung eines bestimmten Anpressdruckes ist wichtig, um eine sichere Fixierung des Displays zu gewährleisten, andererseits aber eine Verformung bzw. Beschädigung des Displays durch einen zu hohen Anpressdruck zu vermeiden.

Vorteilhaft weist die Dichtung gemäß der Erfindung mehrere der in den vorstehenden Ausführungsformen aufgezeigten Besonderheiten, vorzugsweise alle genannten Besonderheiten auf.

Als weitere Besonderheit bezüglich der Dichtung wird als Dichtungswerkstoff vorzugsweise peroxidisch vernetztes Gummi verwendet. Dieser Werkstoff bietet den Vorteil, dass er keine schwefelhaltigen Ausgasungen verursacht, wie dies bei anderen üblichen Dichtungswerkstoffen oft der Fall ist und durch die elektrische Kontakte angegriffen werden können.

Gemäß einer bevorzugten Ausführungsform der Erfindung ist das Display-Gerät als Touch-Display-Gerät ausgebildet. Insbesondere bei einem Touch-Display ist es sowohl zur Gewährleistung der ordnungsgemäßen Funktion des Touch-Displays als auch zum Erreichen eines optimalen optischen Gesamteindrucks wichtig, dass zwar ein Abstand zwischen dem Display und der Frontscheibe besteht, dieser aber möglichst gering ausfällt.

Besonders vorteilhaft ist das Touch-Display dabei als projiziert-kapazitiver Touch ausgebildet, bei dem das Sensorfeld auf der Rückseite, also der dem Benutzer abgewandten Seite der Frontscheibe, angeordnet ist.

Damit bei einem Touch-Display auch bei einem starken Fingerdruck auf die Frontscheibe durch den Benutzer der erforderliche Abstand zwischen Display und Frontscheibe erhalten bleibt, aber dennoch kein unnötig großer Abstand vorgesehen wird, liegt der gewählte Abstand vorteilhaft im Bereich zwischen 1,1 mm und 1,7 mm.

Die Erfindung wird nachfolgend anhand der Zeichnungen näher erläutert. Dabei zeigen:
- FIG 1: den prinzipiellen Aufbau eines Display-Geräts,
- FIG 2: die Abdichtung eines Display-Geräts nach dem Stand der Technik, und
- FIG 3: die Abdichtung eines erfindungsgemäßen Display-Geräts.

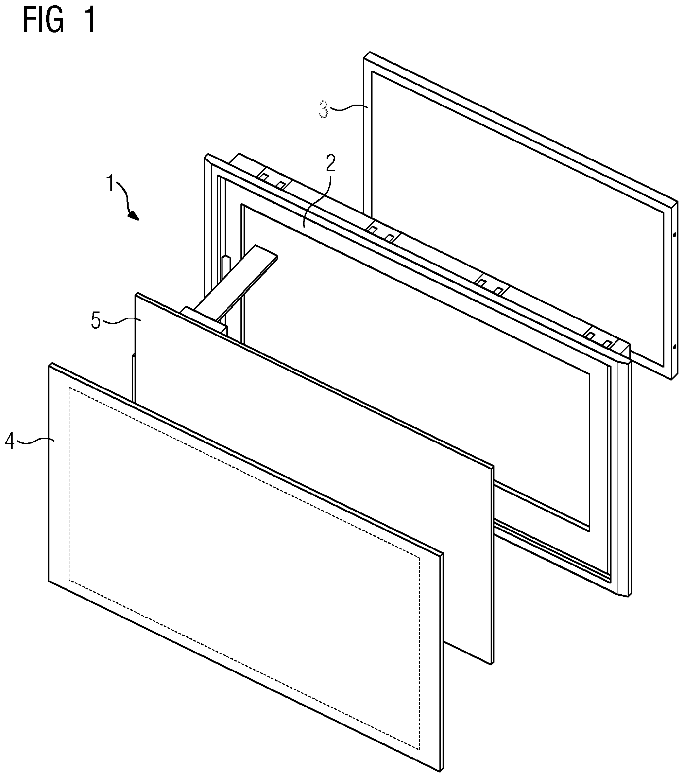

FIG 1 zeigt in einer Explosionsdarstellung wesentliche Komponenten eines als Bediengerät 1 ausgebildeten Display-Geräts. Das Bediengerät 1 kann beispielsweise die Benutzerschnittstelle (HMI = Human Machine Interface) in Verbindung mit einer industriellen Steuerung sein. Das Bediengerät 1 umfasst ein Gehäuse, von dem aus der Zeichnung lediglich ein vorderes Rahmenteil 2 ersichtlich ist. Das Bediengerät 1 umfasst ferner in einem schichtartigen Aufbau eine durchsichtige Scheibe 4, also z.B. eine Glasscheibe oder dergleichen, und ein darunter liegendes Sensorfeld 5. Das Sensorfeld 5 ist zur Herstellung eines projiziert-kapazitiven Touch-Screen mit einem entsprechenden Sensorfeld mit mehreren Ebenen mit leitfähigen Boostern ausgebildet. Vorzugsweise wird das Sensorfeld 5 beim Zusammenbau des Bediengeräts 1 fest mit der Frontscheibe 4 verbunden. Weiterhin umfasst das Bediengerät 1 ein Display 3, beispielsweise ein so genanntes, an sich bekanntes LCD-Panel oder dergleichen, welches beim Zusammenbau von der Rückseite in das Rahmenteil 2 eingefügt wird.

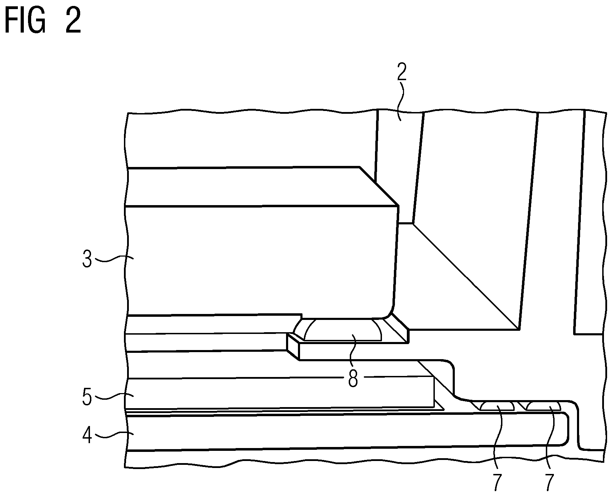

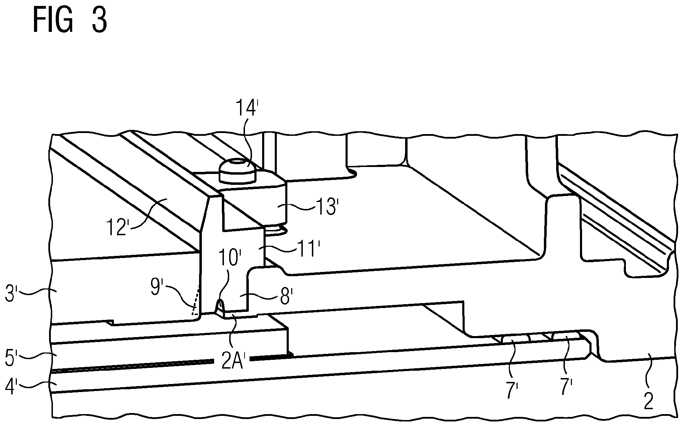

Weitere Einzelheiten dieses an sich bekannten Aufbaus und insbesondere für eine Staub- bzw. Schmutzdichte Ausführung benötigte Dichtungselemente gemäß dem Stand der Technik zeigt FIG 2. Um die im Zusammenhang mit der Erfindung stehenden Details deutlicher darstellen zu können, ist in FIG 2 lediglich ein kleiner Ausschnitt des in FIG 1 gezeigten Bediengeräts 1 dargestellt. So zeigt FIG 2 einen Bereich des Rahmenteils 2, an dessen Frontseite an einem umlaufenden Steg eine Frontscheibe 4, vorzugsweise aus Glas, angeordnet ist. Die Frontscheibe 4 ist mittels zweier umlaufender Kleberaupen 7 am Rahmenteil 2 befestigt. An der Rückseite der Frontscheibe 4 ist ein Sensorfeld 5 angeordnet, welches vorzugsweise fest an der Frontscheibe 4 anhaftet. Es sei an dieser Stelle angemerkt, dass die gezeigten Bauteile eher den prinzipiellen Aufbau und weniger die tatsächlichen Dimensionen zeigen. Insbesondere ist das Sensorfeld 5 tatsächlich im Vergleich zu den übrigen Bauteilen sehr viel dünner ausgebildet. Schließlich ist ein Display 3, vorzugsweise ein LCD- bzw. LED-Panel, mit dem Rahmenbauteil 2 verbunden, das beim Zusammenbau von der Rückseite in das Rahmenteil 2 eingefügt wird. Zur staubdichten Abdichtung des Zwischenraums zwischen der Frontscheibe 4 und dem Display 3 ist auch der äußere Bereich des Displays 3 mit einer umlaufenden Dichtung 8 versehen, die das Display gegenüber dem Rahmenteil 2 abdichtet. Insbesondere die Dichtung 8 trägt dazu bei, dass sich der Abstand zwischen der Frontscheibe 4 und dem Display 3 über ein minimal erforderliches Maß hinaus vergrößert. Abhilfe schafft hier der erfindungsgemäße Aufbau gemäß FIG 3.

Prinzipiell zeigt die Ausführungsform der Erfindung gemäß FIG 3 die gleichen Komponenten wie FIG 2. So ist auch hier ein Rahmenteil 2' ersichtlich, an dessen Vorderseite sich eine Frontscheibe 4' befindet. An der Rückseite der Frontscheibe 4' ist ein Sensorfeld 5' angebracht. Die Frontscheibe 4' ist mittels zweier auf der Rückseite der Frontscheibe 4' angeordneter und um den Randbereich der Frontscheibe 4' umlaufender Kleberaupen 7' am Rahmenteil 2' befestigt, wobei die Kleberaupen 7' auch das Eindringen von Schmutz bzw. Staub in den Zwischenraum zwischen Frontscheibe 4' und Display 3' verhindern.

Der wesentliche Unterschied der erfindungsgemäßen Ausführungsform gemäß FIG 3 gegenüber der bekannten Ausführungsform gemäß FIG 2 besteht jedoch darin, dass die Dichtung 8' zur Abdichtung des Zwischenraumes zwischen dem Display 3' und der Frontscheibe 4' am seitlichen Rand des Displays 3' angeordnet ist und nicht zwischen dem Display 3' und der Frontscheibe 4'. Durch die seitlich um das Display 3' umlaufende Dichtung 8' ist der Bereich zwischen der Frontscheibe 4' und dem Display 3' nach wie vor abgedichtet und vor dem Eindringen von Schmutz bzw. Staub geschützt. Die spezielle Anordnung der Dichtung 8' am seitlichen Rand des Displays trägt jedoch dazu bei, dass durch die Dichtung 8' der Abstand zwischen dem Display 3' und der Frontscheibe 4' nicht unnötig vergrößert wird. Dieser verringerte Abstand führt zu einem kompakteren Aufbau des betreffenden Bediengeräts sowie zu einem besseren optischen Gesamteindruck des auf dem Display 3' dargestellten Bildinhalts. Weiterhin wird bei der erfindungsgemäßen Lösung kein Druck auf die Kleberaupen 7' ausgeübt. So wird beispielsweise verhindert, dass insbesondere bei der Verwendung in einer industriellen Umgebung nicht auszuschließende Vibrationen und Erschütterungen zu einem unbeabsichtigten Lösen der Frontscheibe führen.

Vorteilhaft verläuft die Dichtung 8' geschlossen und damit ohne Unterbrechung seitlich um den äußeren Rand des Displays 3' herum, so dass eine optimale Dichtwirkung erzielt wird.

Vorteilhaft weist das Dichtungsprofil der Dichtung 8' ferner eine Einführschräge 12' auf, die den Einbau des Displays in das Bediengerät erleichtert.

Vorteilhaft weist das Dichtungsprofil der Dichtung weiterhin mehrere Augenlaschen 13' auf (von denen in der Zeichnung nur eine ersichtlich ist), die in Verbindung mit entsprechenden Gehäusezapfen 14' (von denen in der Zeichnung ebenfalls nur einer ersichtlich ist) zur Befestigung der Dichtung 8' im Gehäuse 2' des Bediengerätes dienen. Dadurch kann die Dichtung 8' bei der Montage bereits im Gehäuse 2' befestigt werden, bevor das Display eingesetzt wird. Die Dichtung 8' ist also nicht erst durch die Klemmwirkung des eingesetzten Displays 3' im Gehäuse 2' befestigt. Weiterhin weist die Dichtung 8' eine Schulter 11' auf, die auf einem Gehäuserand des Gehäuses 2' aufliegt. Darüber hinaus umfasst das Gehäuse 2' des Bediengerätes einen um die Display-Öffnung umlaufenden Steg 2A', auf dem die Dichtung 8' ebenfalls aufliegt. Die dargestellten Befestigungsmechanismen ermöglichen eine klebefreie Montage und bieten dennoch einen sicheren Halt der Dichtung. Sie erlauben weiterhin auch eine zerstörungsfrei Demontage. Das Dichtungsprofil weist an der Dichtung 8' gemäß dem Ausführungsbeispiel eine keilförmige Aufweitung 9' der Dichtung 8' im Klemmbereich der Dichtung 8' (also im Bereich zwischen dem Display 3' und dem Gehäuse 2') auf, durch die der Federweg der Dichtung 8' vergrößert wird. Die gestrichelt dargestellte Aufweitung 9' entspräche dabei der Form der Dichtung im nicht eingebauten Zustand des Displays 3' (nicht dargestellt). Im Eingebauten Zustand des Displays 3' gemäß Figur 3 ist die Dichtung 8' im Klemmbereich zwischen dem Display 3' und dem Gehäuse 2' zusammengepresst und daher die Aufweitung 9' nicht vorhanden bzw. nicht erkennbar. Das Dichtungsprofil weist an der Dichtung 8' gemäß dem Ausführungsbeispiel eine umlaufende Nut 10' im Klemmbereich der Dichtung 8' auf zur Verringerung des Anpressdruckes, den die Dichtung 8' auf das Display 3' ausübt.

## Patentansprüche

1. Display-Gerät (1) zur industriellen Anwendung mit einem Gehäuse (2,2'), an dem ein Display (3,3') und eine Frontscheibe (4,4') befestigt sind, aufweisend eine zwischen dem seitlichen Rand des Displays (3') und dem Gehäuse (2') seitlich um das Display (3') umlaufende Dichtung (8'),
**dadurch gekennzeichnet, dass** die Dichtung (8'), in einem Klemmbereich zwischen dem Display und dem Gehäuse, eine Aufweitung (9') zur Vergrößerung des Federwegs der Dichtung und eine umlaufende Nut (10') zur Verringerung des Anpressdrucks, den die Dichtung auf das Display ausübt, aufweist.

2. Display-Gerät (1) nach Anspruch 1, wobei die Dichtung (8') eine Einführschräge (12') aufweist zum Erleichtern der Displaymontage.

3. Display-Gerät (1) nach Anspruch 1 oder 2, wobei die Dichtung Augenlaschen (13') zur Befestigung der Dichtung (8') im Gehäuse (2, 2') aufweist.

4. Display-Gerät (1) nach einem der vorherigen Ansprüche, wobei als Dichtungsmaterial peroxidisch vernetztes Gummi verwendet wird.

5. Display-Gerät (1) nach einem der vorherigen Ansprüche, ausgebildet als Touch-Display-Gerät.

6. Display-Gerät (1) nach Anspruch 5, ausgebildet als projiziert-kapazitives Touch-Display-Gerät mit einem an der Rückseite der Frontscheibe (4') angeordneten kapazitivem Sensorfeld (5') .

7. Display-Gerät (1) nach einem der vorherigen Ansprüchen, wobei der Abstand zwischen dem Display (3') und der Frontscheibe (4') im Bereich zwischen 1,1 mm und 1,7 mm liegt.

## Claims

1. Display apparatus (1) for industrial use, with a housing (2, 2'), to which a display (3, 3') and a front plate (4, 4') are fastened, having a seal (8') laterally surrounding the display (3') between the lateral edge of the display (3') and the housing (2'),
**characterised in that** the seal (8'), in a clamping region between the display and the housing, has an expansion (9') for enlarging the spring travel of the seal and a circumferential groove (10') for reducing the contact pressure which the seal exerts on the display.

2. Display apparatus (1) according to claim 1, wherein the seal (8') has an inclined insertion surface (12') for simplifying the display assembly.

3. Display apparatus (1) according to claim 1 or 2, wherein the seal has eyelashes (13') for fastening the seal (8') in the housing (2, 2').

4. Display apparatus (1) according to one of the preceding claims, wherein peroxide crosslinked rubber is used as sealing material.

5. Display apparatus (1) according to one of the preceding claims, embodied as a touch display apparatus.

6. Display apparatus (1) according to claim 5, embodied as a projected capacitive touch display apparatus with a capacitive sensor field (5') arranged on the rear of the front panel (4').

7. Display apparatus (1) according to one of the preceding claims, wherein the spacing between the display (3') and the front panel (4') is in the region from 1.1 mm to 1.7 mm.

## Revendications

1. Appareil (1) d'affichage en vue d'une application industrielle, comprenant un boîtier (2, 2'), auquel sont fixés un écran (3, 3') et une vitre (4, 4') avant, comportant une garniture (8') d'étanchéité faisant le tour latéralement autour de l'écran (3'), entre le bord latéral de l'écran (3') et le boîtier (2'),
**caractérisé en ce que**
la garniture (8') d'étanchéité a, dans une partie de serrage entre l'écran et le boîtier, un élargissement (9'), pour augmenter l'élasticité de la garniture d'étanchéité, et une rainure (10') faisant le tour, pour diminuer la pression que la garniture d'étanchéité applique à l'écran.

2. Appareil (1) d'affichage suivant la revendication 1, dans lequel la garniture (8') d'étanchéité a un biseau (12') d'introduction pour faciliter le montage de l'écran.

3. Appareil (1) d'affichage suivant la revendication 1 ou 2, dans lequel la garniture d'étanchéité a des pattes (13') à oeillet pour fixer la garniture (8') d'étanchéité dans le boîtier (2, 2').

4. Appareil (1) d'affichage suivant l'une des revendications précédentes, dans lequel il est utilisé comme matériau d'étanchéité du caoutchouc réticulé par un peroxyde.

5. Appareil (1) d'affichage suivant l'une des revendications précédentes, constitué en appareil d'affichage tactile.

6. Appareil (1) d'affichage suivant la revendication 5, constitué sous la forme d'un appareil d'affichage tactile capacitif à projection, comprenant un champ (5') de capteurs capacitifs disposés sur la face arrière de la vitre (4') avant.

7. Appareil (1) d'affichage suivant l'une des revendications précédentes, dans lequel la distance entre l'écran (3') et la vitre (4') avant est comprise entre 1,1 mm et 1,7 mm.
